# EUROPEAN PATENT SPECIFICATION

(11) **EP 1 842 205 B1**
(45) Date of publication and mention of the grant of the patent: **25.12.2013**
(21) Application number: 06733868.1
(22) Date of filing: 24.01.2006
(51) Int. Cl.: G21C 17/108, G21C 17/10, G01T 3/00

(54) **NEUTRON DETECTOR ASSEMBLY WITH VARIABLE LENGTH RHODIUM EMITTERS**
NEUTRONENERKENNUNGSANORDNUNG MIT RHODIUM-EMITTERN VARIABLER LÄNGE
ENSEMBLE DETECTEUR DE NEUTRONS POURVU D'EMETTEURS AU RHODIUM A LONGUEUR VARIABLE

(30) Priority: 27.01.2005 US 45167
(43) Date of publication of application: 10.10.2007
(73) Proprietor: AREVA NP Inc., Lynchburg, VA 24501 (US)
(72) Inventor: CHENG, Alexander Y.C., Lynchburg, VA 24503 (US)
(74) Representative: Domenego, Bertrand
(86) International application number: PCT/US2006/002548
(87) International publication number: WO 2006/081268

(56) References cited:
- EP-A1- 0 496 998
- GB-A- 2 015 778
- US-A- 4 087 693
- US-A- 4 140 911
- US-A- 4 396 839
- US-A- 5 251 242
- US-B1- 6 430 247

## Description

### FIELD OF THE INVENTION

The present invention relates to the field of measuring neutron flux values in reactor cores of nuclear power plants. More specifically, the present invention provides a neutron detector assembly with variable length rhodium emitters, the detector assembly used to measure neutron flux in a nuclear power plant, the variable length rhodium emitters positioned between nuclear fuel assembly spacer grids.

### BACKGROUND INFORMATION

Detector assemblies for nuclear reactors are installed or placed in nuclear fuel assemblies in order to accurately monitor reactor conditions during core operation. The detectors assemblies used to monitor these nuclear conditions in the reactor may be made of two different detector units, each of the detector units made of different materials, namely a platinum and vanadium combination, a rhodium and vanadium combination or a cobalt and vanadium combination.

GB 2 015 778, EP 0 496 998, US 6 430 247 and US 4 140 911 disclose detector assemblies for nuclear reactors.

Certain designs of existing detector assemblies measure gamma radiation emanating from the core of a nuclear power plant. The measurement of the gamma radiation by these detectors allows nuclear power plant operators to roughly determine the amount of nuclear activity within the core at a specific time. The drawback of these detector assemblies however, is that by using gamma radiation to measure core activity, various inefficiencies are encountered. In the common nuclear core, the fissioning of uranium or other material in the fuel assemblies provides a source of the gamma radiation. Other materials in the core, however, also become irradiated during core operation, thus providing additional gamma radiation not associated with the fission process occurring as a result of the fuel. Over time, more materials become irradiated and therefore the background gamma radiation component becomes large. This additional background gamma radiation provides inaccuracies for measurement of the nuclear activity in the core as this gamma radiation is present from sources other than the fissioning uranium of the nuclear fuel. To compensate for this additional gamma energy background reading, an estimate of the additional background radiation must be subtracted from the overall amount of gamma radiation measured by the detectors to provide an estimated amount of activity present in the nuclear core. The output of the individual gamma radiation detectors must then be interpreted by a computer in order to determine the amount of nuclear activity in the core. The interpretation of the signals by the computer is performed through a complex mathematical analysis of the signals generated by the individual radiation detectors. This complex mathematical analysis, while well intentioned, also introduces uncertainties into the analysis of the amount of nuclear activity occurring in the nuclear core. The use of such gamma energy detectors and the assumptions accompanying their use, therefore, has significant drawbacks for plant operators as the measured-gamma radiation values and the subsequently determined nuclear core activity levels are merely rough estimates of actual core conditions.

These existing detector assembly designs are provided with individual detectors placed between spacers in the nuclear fuel assembly. Placement of the individual detectors between the spacers of the nuclear fuel assembly allows for unimpeded reception of gamma radiation from the nuclear core so that a determination of nuclear activity can be made. The individual detectors placed between the spacer elements are of equal length and are considered to be point measuring devices. In other fuel assembly designs, equivalent length gamma energy detectors are placed along intervals of the axial direction of the nuclear fuel assembly while a set of companion vanadium detectors are placed along the entire axial length of the fuel assembly. In still other configurations, cobalt detectors are placed at equal lengths down the axial length of a nuclear fuel assembly. Companion vanadium detectors which are equally spaced are also placed in between spacer grid elements. None of these detector assembly designs provide detection capability in areas that are more remote in the nuclear fuel assembly, namely a top or bottom part of the assembly where the spacing between individual spacers is of a non-uniform configuration. These detector systems assume that the nuclear flux conditions at the top or bottom of the nuclear fuel assembly are within expected parameters because these positions are not monitored. If localized reactivity is greater in these topmost and bottommost areas, potential fuel damage may occur. To date, measurement of these areas is not performed through these systems.

Existing nuclear fuel assembly detector systems furthermore treat these configurations in an analytically simple way. These systems analytically treat the detectors as measuring gamma radiation energy at a specific point in the nuclear core. As a consequence of this analytical technique and the detector systems used, five or six points are measured within a nuclear fuel assembly and an overall analysis of the nuclear activity occurring along the axial direction of the nuclear fuel assembly is not performed.

Platinum is used in some nuclear fuel assembly detector systems to measure the gamma radiation present in the nuclear core. As provided above, measurement of gamma radiation activity in the nuclear fuel assembly is prone to error due to several radiation sources being present in the nuclear core which can contribute to gamma radiation fields. Platinum is not used to determine the overall neutron flux. The use of vanadium in detector assembly designs also limits the overall effectiveness of the detector assembly designs because vanadium provides a very small signal upon which any measured core quantities can be obtained. To obtain appreciable amounts of signal, vanadium components must be of considerable size to transmit the signal for analysis. As is readily understood by those of skill in the art, compact designs for nuclear fuel assemblies are preferred rather than fuel assembly systems that are bulky, large and inefficient.

Certain existing detector systems measure neutron flux within a reactor fuel assembly. These detector systems provide a casing that is filled with a gas, such as helium, with an anode and cathode position at center of the system and at an edge of the casing respectively. These detector systems are placed within a nuclear fuel assembly, however the detector systems are not installed in edge areas of the nuclear fuel assembly. Other detector systems which measure neutron flux are designed for quick insertion into a nuclear fuel assembly (i.e. they are moveable in the core), but have the significant drawback of not providing for analysis of neutron flux fields during extended periods in the core. These movable detector systems quickly degrade after exposure to the resident radiation in the core and are not configured or designed for long residence times within the nuclear core.

There is therefore a need to provide a detector arrangement system which will allow for monitoring nuclear flux conditions in sections of a nuclear fuel assembly which have non-uniform spacing.

There is also a need to provide a nuclear fuel assembly detector system which is self powered and requires minimal maintenance during operation.

There is a further need to provide a nuclear fuel assembly detector system which will directly measure neutron flux capability and not be subject to the errors present with measuring gamma radiation background levels in existing detector arrangements.

There is also a further need to provide a nuclear fuel assembly detector system which will measure neutron flux levels along the entire axial length of the nuclear fuel assembly and is not limited to providing a point reference calculation present in existing detector configurations.

There is a still further need to provide a nuclear fuel assembly detector system which will allow for monitoring of the neutron flux in a fuel assembly while minimizing the overall size of the detector system.

There is also a need to provide a nuclear fuel assembly detector system which will measure neutron flux fields in the ends of fuel assemblies over the life of the core.

### SUMMARY

It is therefore an objective of the present invention to provide a detector arrangement system that will allow for monitoring nuclear flux conditions in sections of a nuclear fuel assembly which have non-uniform spacing.

It is also an objective of the present invention to provide a nuclear fuel assembly detector system that is self powered and requires minimal maintenance during operation.

It is a still further objective of the present invention to provide a nuclear fuel assembly detector system which will directly measure neutron flux capability and not be subject to the errors present with measuring gamma radiation background levels in existing detector arrangements

It is also an objective of the present invention to provide a nuclear fuel assembly detector system which will measure neutron flux levels along the entire axial length of the nuclear fuel assembly and is not limited to providing a point reference calculation present in existing detector configurations.

There is a still further objective of the present invention to provide a nuclear fuel assembly detector system which will allow for monitoring of the neutron flux in a fuel assembly while minimizing the overall size of the detector system.

There is a still further objective of the present invention to provide a nuclear fuel assembly detector system which will measure neutron flux fields in the ends of fuel assemblies over the life of the core.

The objectives of the present invention are achieved as illustrated and described. The present invention provides a system to measure neutron flux in a nuclear fuel assembly according to claim 1.

The present invention also includes a method for measuring neutron flux according to claim 4.

The method of measuring a neutron flux may also be augmented wherein the step of measuring the neutron flux field with the at least three detectors is performed by activating an inner emitter placed in each of the at least three detectors, the inner emitter configured to send a signal from the matter to a lead wire.

The method may also provide for the steps of identifying a position of the spacers in the nuclear fuel assembly along an axial direction of the nuclear fuel assembly, positioning a first of the detectors in an area of the top of the nuclear fuel assembly such that the first detector is exposed to neutron flux away from the spacers, and positioning a second of the detectors in an area of the bottom of the nuclear fuel assembly such that the second detector is exposed to neutron flux away from the spacers. The method of measuring neutron flux may also provide for the steps of positioning the at least three detectors in the nuclear fuel assembly through inserting the at least three detectors into an instrument tube in the nuclear fuel assembly.

### BRIEF DESCRIPTION OF THE DRAWINGS

Figure 1 illustrates an existing detector assembly used to measure gamma energy present in a nuclear fuel assembly, wherein the topmost and bottommost sections of the nuclear fuel assembly are not measured.
Figure 2 illustrates a rhodium detector assembly system to measure neutron flux in a nuclear reactor core in conformance with the present invention.
Figure 3 illustrates a single rhodium detector with an internal rhodium emitter, the internal rhodium emitter covered by an accompanying exterior sheath.

### DETAILED DESCRIPTION

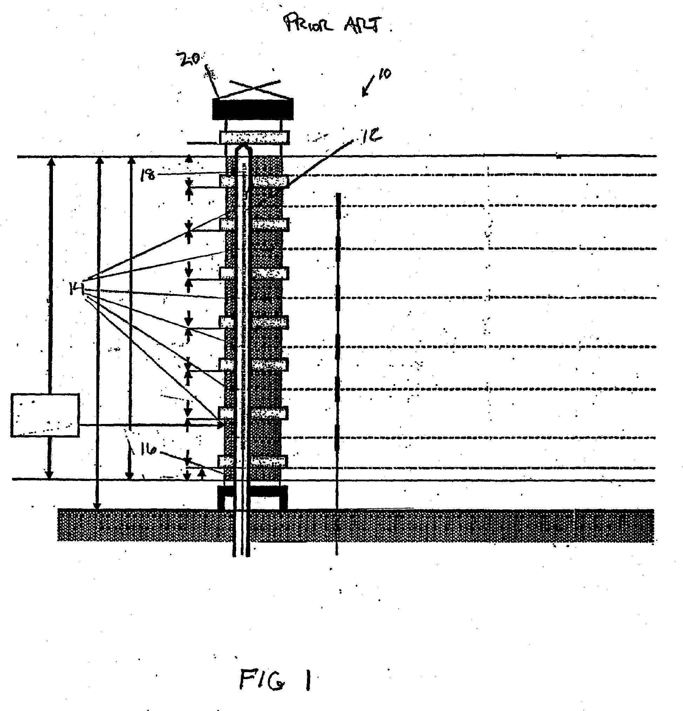

Referring to Figure 1, an existing gamma energy radiation monitoring system 10 is illustrated. The existing gamma energy radiation monitoring system 10 provides individual detectors 12 placed at central fuel assembly positions 14 (i.e. not at the ends of the fuel assemblies). The gamma energy radiation monitoring system 10 measures these central locations for gamma radiation in the nuclear core. In these systems 10, due to the limitations of accurate monitoring, detectors are deleted from the edge areas 16,18 near the top and bottom of the fuel assembly 20. Moreover, any activity in this area of the fuel assembly 20 is assumed to be within operational parameters if gamma radiation signatures are within certain defined limits. The limitation of this design 10 is that accurate measurements of core conditions are not achieved because assumptions are made for these top 18 and bottom 20 areas. Moreover, the systems 10 provided are usually treated as point measuring systems and do not provide an overall measurement capability over the axial length of the detector. Thus, these systems 10 are severely limited in that nuclear core conditions are determined by comparing individual point measurements along the axis of the fuel assembly 20.

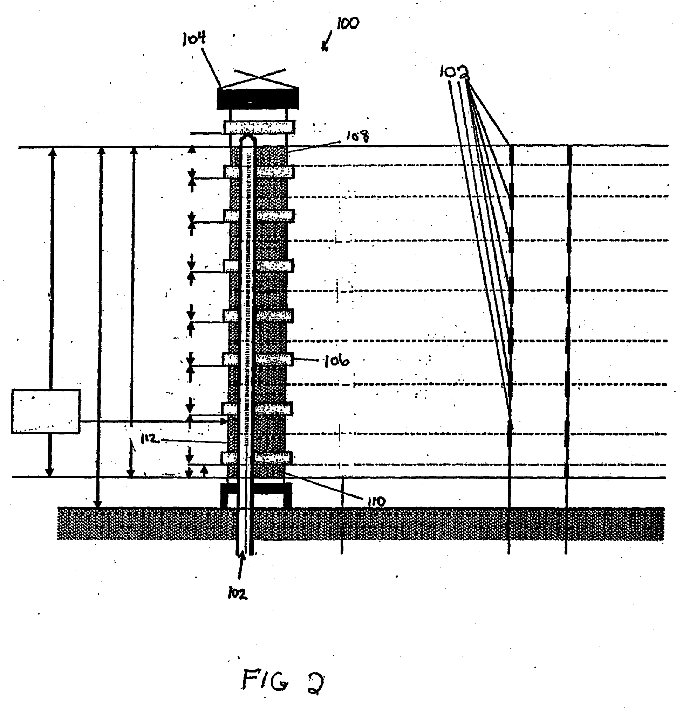

Referring to Figure 2, a system 100 for monitoring the neutron flux of a nuclear reactor is illustrated. The system 100 is composed of individual detectors 102 placed inside a nuclear fuel assembly 104 wherein each of these nuclear fuel assembly detectors 102 is configured to monitor an overall amount of neutron flux. The number of detectors 102 may be varied such that the detectors 102 can cover all areas of the nuclear fuel assembly 104 which are not provided with nuclear fuel rod spacer elements 106. The position of the detectors 102 inside the fuel assembly 104 are illustrated offset from the fuel assembly 104 for clarity. In particular, the present invention provides detectors 102 which are positioned throughout the nuclear fuel assembly 104. The detectors 102 are located in an uppermost quadrant 108 or space of the nuclear fuel assembly 104 and/or a lowermost section 110 of the nuclear fuel assembly 104. The present invention provides such a configuration in contravention to other known types of monitoring equipment. The present invention provides a number of nuclear detectors which are sufficient in order to identify the neutron activity occurring in the entire nuclear fuel assembly. The detectors may be differing lengths, placed in the fuel assembly in order to position the detectors 102 in spaces not occupied by the nuclear fuel assembly fuel rod spacers 106. The nuclear fuel rod spacers 106 provide shielding of the neutron flux from the remainder of the fuel rods 112 behind the fuel rods. As a result, measurement of the neutron activity in the vicinity of the fuel rods spacers 106 is not performed as the localized edge effects of the neutron flux vary.

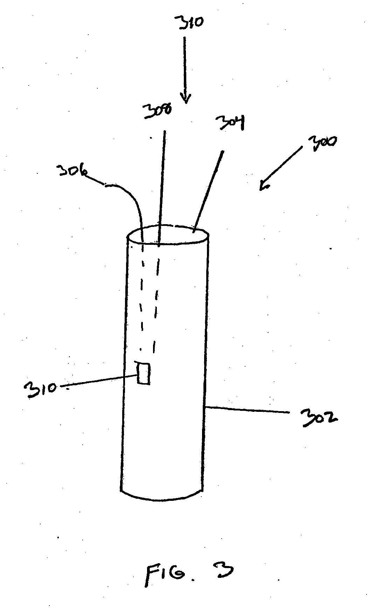

Referring to Figure 3, each detector 300 is provided with an exterior sheath 302 which is configured to protect the inner components 304 of the detector 300. The sheath 302 may be any geometry to allow the detector 300 to be incorporated into differing types of nuclear fuel assemblies. In the illustrated embodiment, the sheath 302 is rod shaped. In the illustrated embodiment, the system 100 is installed in an instrument tube of a nuclear fuel assembly, wherein the system 100 is be raised or lowered in the fuel assembly by operators during nuclear reaction. The insertion of the system 100 is accomplished through the lower portion of the fuel assembly which in the currently illustrated embodiment is for a pressurized water reactor. The exterior sheath 302 is provided with a material which has a low neutron capture cross-section to prevent the unintended capture of neutrons before the neutrons travel into the central volume defined by the sheath 302. The exterior sheath 302 is made of non-corrosive material to prevent corrosion products from entering the nuclear reactor coolant water. Non-limiting examples of materials provided for use as the exterior sheath 302 include zirconium alloys and stainless steel alloys. The thickness of the exterior sheath 302 may also be varied to provide sufficient pressure retaining capability to allow the system to withstand forces present from pressure, temperature, neutron bombardment and anticipated accident loading conditions related to loss of coolant events and seismic conditions. A lead 306 is provided for each individual detector 300. The lead 306 provides the capability of transmitting signals from the detector 300 to other components, such as a computer, to interpret the signals provided. The lead 306 traverses the length of the instrumentation tubes to provide the signals needed. The lead 306 is insulated from heat and from further neutron activity to prevent any potentially spurious signals from being created as the lead 306 traverses the areas inside the nuclear fuel assembly. The lead is not neutron sensitive.

The detector 300 is a self powered unit. The detector 300 is placed inside or adjacent to a nuclear fuel assembly, wherein the detector 300 awaits the presence of a neutron reaction. The presence of a neutron reaction and liberated neutrons thereby causes the emitter 310 in the detector 300 to become energized. The emitter 310 is manufactured from rhodium, therefore providing a signal strength which can be used to accurately determine the presence of a neutron flux. The use of rhodium in this configuration allows the system 100 to be used in an unpowered state because the rhodium generates a signal without any need for further electrical power. The rhodium emitter 310 in the present invention is configured as a tubular element 310 as illustrated in figure 3. Additionally, the use of rhodium in the emitter 310 configuration has other advantages over prior art configurations which merely measure gamma radiation. The use of rhodium eliminates the use of large vanadium electrodes which produce weak signals for neutrons encountered in the fuel assembly. Additionally, the use of platinum is avoided, again because the present invention measures neutron activity, for which units employing platinum components are not suitable. Rhodium also has other benefits, including providing a higher melting point than platinum, therefore providing a safer overall design. Rhodium is also a material which is highly resistant to corrosion, and is therefore applicable for use in nuclear environments. Moreover, rhodium has a lower density than platinum, thereby minimizing the overall installed weight of the system 100 in the fuel assembly. Although shown as a tubular element, other configurations are possible and therefore the illustrated configuration is but one exemplary alternative.

The detector 300 is installed into a pressurized water reactor nuclear fuel assembly from a top or bottom of the assembly in the direction 310 provided. Each detector 300 may be individually placed in the end of the instrument tube in the fuel assembly such that a signal from each detector 300 may be analyzed by a computer. Alternatively, the detectors 300 may be connected to a common lead wire and analyzed by a computer to determine the amount of neutron flux present at the detector locations, as well as establishing a profile for these detectors. In the illustrated embodiment, the overall length of each detector is approximately 12.8 cm. Long detectors may be used, for example 40 centimeters in length, in order to maximize the coverage vary in between spacers in the nuclear fuel assembly. The rhodium detectors presented in the present invention are carefully manufactured since a very tight control on the overall mass presented in the detector is attained. The external physical dimensions of the detector are measured with X-rays to determine the exact length of the unit. An additional lead 308 may also be incorporated in a parallel relation to lead 306. The additional lead 308 does not have any emitters attached. The purpose of the additional lead 308 is to duplicate the spurious signals due to gamma radiation encountered by lead 306. With this configuration, the amount of gamma radiation exhibited on the leads 306, 308 can be determined so that more accurate measurements are made.

The detector 300 may also be installed in nuclear fuel assemblies such that a common sheath is provided over all of the internal rhodium emitters. The presence of a common sheath for all emitters placed in the nuclear fuel assembly allows the emitters to be inserted and\or withdrawn from the nuclear fuel assembly at a single time.

The present invention provides many advantages over existing systems used to measure gamma radiation in a nuclear power plant environment. The present invention provides monitoring locations throughout the nuclear fuel assembly, therefore providing a more accurate and detailed analysis of the overall neutron activity of the core whereas existing systems do not measure any core properties in the ends of nuclear fuel assemblies in a fixed full time basis. The monitoring of neutron flux levels in the nuclear reactor provides a more accurate indication of current core conditions as neutron production is directly attributable to the nuclear fission process, while gamma energy levels may be present in the "background" radiation levels of the reactor due to activated materials placed in close proximity to fuel assemblies, such as piping, corrosion deposits and other materials not directly attributable to the nuclear fission process and existing neutron measuring systems neglect the end areas of the nuclear fuel assembly. The present invention also provides a configuration which minimizes the overall size of the neutron detector system which is particularly advantageous for compact designed nuclear fuel assemblies. The present invention is also a "fixed" system and provides for neutron monitoring over an extended period of core operation, rather than movable detector systems which quickly degrade when in the core.

In the foregoing specification, the invention has been described with reference to specific exemplary embodiments thereof. It will, however, be evident that various modifications and changes may be made thereunto without departing from the scope of the invention as set forth in the appended claims. The specification and drawings are accordingly to be regarded in an illustrative rather than in a restrictive sense.

## Claims

1. A system (100) to measure neutron flux in a nuclear fuel assembly (104), the nuclear fuel assembly (104) having at least two spacers (106), wherein the at least two spacers (106) separate the nuclear fuel assembly (104) into at least a topmost part (108) and a bottommost part (110), the system (100) comprising:
detectors (102, 300) placed in the nuclear fuel assembly (104), each of the detectors (102, 300) having an outer sheath (302) and an inner emitter (310), the emitter (310) having a structure to accept neutrons and provide an electrical signal, the outer sheath (302) forming an interior volume into which the emitter (310) is placed;
an exterior lead; and
at least one lead (306) connected to each emitter (310), the lead (306) transmitting the signal from the emitter (310) to the exterior lead, wherein
at least two detectors (102, 300) are of different lengths, and wherein
at least a first of the detectors (102, 300) is placed in the topmost part (108) of the nuclear fuel assembly (104), at least a second of the detectors (102, 300) is placed in the bottommost part (110) of the nuclear fuel assembly (104), and
wherein the first detector and the second detector are exposed to neutron flux away from the spacers (106) to measure neutron flux in the ends of the fuel assembly (104).

2. The system (100) to measure neutron flux according to claim 1, the system (100) comprising at least three neutron flux detectors (102, 300),
wherein the detectors (102, 300) together measure the neutron flux along the entire length of the fuel assembly (104), and
wherein a third detector is positioned between the first and second detectors.

3. The system (100) to measure neutron flux according to claim 1, wherein the at least two detectors (102, 300) are made of rhodium.

4. A method of measuring a neutron flux, comprising:
providing a nuclear fuel assembly (104), the nuclear fuel assembly (104) having at least two spacers (106), wherein the at least two spacers (106) separate the nuclear fuel assembly (104) into at least a topmost part (108) and a bottommost part (110);
providing at least three detectors (102, 300) in the nuclear fuel assembly (104), wherein at least a first of the detectors (102, 300) is placed in the topmost part (108) of the nuclear fuel assembly (104), at least a second of the detectors is placed in the bottommost part (110) of the nuclear fuel assembly (104), and a third detector is positioned between the first and second detectors, wherein at least two detectors are of different lengths,
exposing the nuclear fuel assembly (104) to a neutron flux field; and
measuring the neutron flux field along the entire length of the fuel assembly (104) with the at least three detectors (102, 300).

5. The method of measuring a neutron flux according to claim 4, wherein the step of measuring the neutron flux field with the at least three detectors (102, 300) is performed by activating an inner emitter (310) placed in each of the at least three detectors (102, 300), the inner emitter (310) configured to send a signal from the matter to a lead wire.

6. The method of measuring neutron flux according to any one of claims 4 and 5, wherein the step of providing the at least three detectors (102, 300) in the nuclear fuel assembly (104) comprises:
identifying a position of the spacers (106) in the nuclear fuel assembly (104) along an axial direction of the nuclear fuel assembly (104); and then
positioning a the first of the detectors (102, 300) in an area of the top (108) of the nuclear fuel assembly (104) such that the first detector is exposed to neutron flux away from the spacers (106); and
positioning the second of the detectors (102, 300) in an area of the bottom (110) of the nuclear fuel assembly (104) such that the second detector is exposed to neutron flux away from the spacers (106).

7. The method of measuring neutron flux according to any one of claims 4, 5 and 6, wherein the step of providing the at least three detectors (102, 300) in the nuclear fuel assembly (104) comprises:
positioning the at least three detectors (102, 300) in the nuclear fuel assembly (104) through inserting the at least three detectors (102, 300) into an instrument tube in the nuclear fuel assembly (104).

## Patentansprüche

1. System (100) zum Messen eines Neutronenflusses in einer nuklearen Brennstoffanordnung (104), wobei die nukleare Brennstoffanordnung (104) zumindest zwei Abstandshalter (106) hat und die zumindest zwei Abstandshalter (106) die nukleare Brennstoffanordnung (104) in zumindest einen obersten Teil (108) und einen untersten Teil (110) trennen, welches System (100) aufweist:
Detektoren (102, 300), die in der nuklearen Brennstoffanordnung (104) angeordnet sind, wobei jeder der Detektoren (102, 300) eine äußere Hülle (302) und einen inneren Emitter (310) hat, der Emitter (310) eine Struktur zum Aufnehmen von Neutronen und zum Liefern eines elektrischen Signals hat, und die äußere Hülle (302) ein inneres Volumen bildet, in welchem der Emitter (310) angeordnet ist;
einen äußeren Leiter; und
zumindest einen Leiter (306), der mit jedem Emitter (310) verbunden ist, wobei der Leiter (306) das Signal von dem Emitter (310) zu dem äußeren Leiter überträgt, wobei
zumindest zwei Detektoren (102, 300) eine unterschiedliche Länge haben, und wobei
zumindest ein erster der Detektoren (102, 300) in dem obersten Teil (108) der nuklearen Brennstoffanordnung (104) angeordnet ist und zumindest ein zweiter der Detektoren (102, 300) in dem untersten Teil (110) der nuklearen Brennstoffanordnung (104) angeordnet ist, und wobei der erste Detektor und der zweite Detektor einem Neutronenfluss von den Abstandshaltern (106) weg ausgesetzt sind, um den Neutronenfluss in den Enden der Brennstoffanordnung (104) zu messen.

2. System (100) zum Messen eines Neutronenflusses nach Anspruch 1, welches System (100) zumindest drei Neutronenfluss-Detektoren (102, 300) aufweist,
wobei die Detektoren (102, 300) zusammen den Neutronenfluss entlang der gesamten Länge der Brennstoffanordnung (104) messen, und wobei ein dritter Detektor zwischen dem ersten und dem zweiten Detektor angeordnet ist.

3. System (100) zum Messen eines Neutronenflusses nach Anspruch 1, bei dem die zumindest zwei Detektoren (102, 300) aus Rhodium bestehen.

4. Verfahren zum Messen eines Neutronenflusses, welches aufweist:
Vorsehen einer nuklearen Brennstoffanordnung (104), welche nukleare Brennstoffanordnung (104) zumindest zwei Abstandshalter (106) hat und wobei die zumindest zwei Abstandshalter (106) die nukleare Brennstoffanordnung (104) in zumindest einen obersten Teil (108) und einen untersten Teil (110) trennen;
Vorsehen von zumindest drei Detektoren (102, 300) in der nuklearen Brennstoffanordnung (104), wobei zumindest ein erster der Detektoren (102, 300) in den obersten Teil (108) der nuklearen Brennstoffanordnung (104) angeordnet ist, zumindest ein zweiter der Detektoren in dem untersten Teil (110) der nuklearen Brennstoffanordnung (104) angeordnet ist, und ein dritter Detektor zwischen dem ersten und dem zweiten Detektor angeordnet ist, wobei zumindest zwei Detektoren eine unterschiedliche Länge haben,
Aussetzen der nuklearen Brennstoffanordnung (104) einem Neutronenflussfeld; und
Messen des Neutronenflussfeldes entlang der gesamten Länge der Brennstoffanordnung (104) mit den zumindest drei Detektoren (102, 300).

5. Verfahren zum Messen eines Neutronenflusses nach Anspruch 4, wobei der Schritt des Messens des Neutronenflussfeldes mit den zumindest drei Detektoren (102, 300) durchgeführt wird durch Aktivieren eines inneren Emitters (310), der in jedem der zumindest drei Detektoren (102, 300) angeordnet ist, wobei der innere Emitter (310) ausgebildet ist, ein Signal von dem Emitter zu einem Leiterdraht zu senden.

6. Verfahren zum Messen eines Neutronenflusses nach einem der Ansprüche 4 und 5, bei dem der Schritt des Vorsehens der zumindest drei Detektoren (102, 300) in der nuklearen Brennstoffanordnung (104) aufweist:
Identifizieren einer Position der Abstandshalter (106) in der nuklearen Brennstoffanordnung (104) entlang einer axialen Richtung der nuklearen Brennstoffanordnung (104); und dann Positionieren des ersten der Detektoren (102, 300) in einem Bereich der Spitze (108) der nuklearen Brennstoffanordnung (104) derart, dass der erste Detektor einem Neutronenfluss von den Abstandshaltern (106) weg ausgesetzt ist; und
Positionieren des zweiten der Detektoren (102, 300) in einem Bereich des Bodens (110) der nuklearen Brennstoffanordnung (104) derart,
dass der zweite Detektor einem Neutronenfluss von den Abstandshaltern (106) weg ausgesetzt ist.

7. Verfahren zum Messen eines Neutronenflusses nach einem der Ansprüche 4, 5 und 6, bei dem der Schritt des Vorsehens der zumindest drei Detektoren (102, 300) in der nuklearen Brennstoffanordnung (104) aufweist:
Positionieren der zumindest drei Detektoren (102, 300) in der nuklearen Brennstoffanordnung (104) durch Einsetzen der zumindest drei Detektoren (102, 300) in ein Instrumentenrohr in der nuklearen Brennstoffanordnung (104).

## Revendications

1. Système (100) pour mesurer un flux de neutrons dans un assemblage de combustible nucléaire (104), l'assemblage de combustible nucléaire (104) comportant au moins deux éléments d'espacement (106), dans lequel lesdits au moins deux éléments d'espacement (106) séparent l'assemblage de combustible nucléaire (104) en au moins une partie supérieure (108) et une partie inférieure (110), le système (100) comprenant :
des détecteurs (102, 300) placés dans l'assemblage de combustible nucléaire (104), chacun des détecteurs (102, 300) comportant une gaine externe (302) et un émetteur interne (310), l'émetteur (310) ayant une structure pour accepter les neutrons et fournir un signal électrique, la gaine externe (302) formant un volume intérieur dans lequel l'émetteur (310) est placé ;
un conducteur extérieur ; et
au moins un conducteur (306) connecté à chaque émetteur (310), le conducteur (306) transmettant le signal de l'émetteur (310) au conducteur extérieur, dans lequel
au moins deux détecteurs (102, 300) sont de différentes longueurs, et dans lequel
au moins un premier des détecteurs (102, 300) est placé dans la partie supérieure (108) de l'assemblage de combustible nucléaire (104), au moins un deuxième des détecteurs (102, 300) est placé dans la partie inférieure (110) de l'assemblage de combustible nucléaire (104), et
dans lequel le premier détecteur et le deuxième détecteur sont exposés au flux de neutrons à distance des éléments d'espacement (106) pour mesurer le flux de neutrons dans les extrémités de l'assemblage de combustible (104).

2. Système (100) pour mesurer un flux de neutrons selon la revendication 1, le système (100) comprenant au moins trois détecteurs de flux de neutrons (102, 300),
dans lequel les détecteurs (102, 300) mesurent, ensemble, le flux de neutrons le long de la longueur entière de l'assemblage de combustible (104), et
dans lequel un troisième détecteur est positionné entre les premier et deuxième détecteurs.

3. Système (100) pour mesurer un flux de neutrons selon la revendication 1, dans lequel lesdits au moins deux détecteurs (102, 300) sont réalisés en rhodium.

4. Procédé de mesure d'un flux de neutrons, comprenant :
la fourniture d'un assemblage de combustible nucléaire (104), l'assemblage de combustible nucléaire (104) comportant au moins deux éléments d'espacement (106), dans lequel lesdits au moins deux éléments d'espacement (106) séparent l'assemblage de combustible nucléaire (104) en au moins une partie supérieure (108) et une partie inférieure (110) ;
la fourniture d'au moins trois détecteurs (102, 300) dans l'assemblage de combustible nucléaire (104), dans lequel au moins un premier des détecteurs (102, 300) est placé dans la partie supérieure (108) de l'assemblage de combustible nucléaire (104), au moins un deuxième des détecteurs est placé dans la partie inférieure (110) de l'assemblage de combustible nucléaire (104), et un troisième détecteur est positionné entre les premier et deuxième détecteurs, dans lequel au moins deux détecteurs sont de différentes longueurs,
l'exposition de l'assemblage de combustible nucléaire (104) à un champ de flux de neutrons ; et
la mesure du champ de flux de neutrons le long de la longueur entière de l'assemblage de combustible (104) par lesdits au moins trois détecteurs (102, 300).

5. Procédé de mesure d'un flux de neutrons selon la revendication 4, dans lequel l'étape de mesure du champ de flux de neutrons par lesdits au moins trois détecteurs (102, 300) est effectuée en activant un émetteur interne (310) placé dans chacun desdits au moins trois détecteurs (102, 300), l'émetteur interne (310) étant configuré pour envoyer un signal de la substance à un fil conducteur.

6. Procédé de mesure d'un flux de neutrons selon l'une quelconque des revendications 4 et 5, dans lequel l'étape de fourniture desdits au moins trois détecteurs (102, 300) dans l'assemblage de combustible nucléaire (104) comprend :
l'identification d'une position des éléments d'espacement (106) dans l'assemblage de combustible nucléaire (104) le long d'une direction axiale de l'assemblage de combustible nucléaire (104) ; et ensuite
le positionnement du premier des détecteurs (102, 300) dans une zone du haut (108) de l'assemblage de combustible nucléaire (104) de sorte que le premier détecteur soit exposé au flux de neutrons à distance des éléments d'espacement (106) ; et
le positionnement du deuxième des détecteurs (102, 300) dans une zone du bas (110) de l'assemblage de combustible nucléaire (104) de sorte que le deuxième détecteur soit exposé au flux de neutrons à distance des éléments d'espacement (106).

7. Procédé de mesure d'un flux de neutrons selon l'une quelconque des revendications 4, 5 et 6, dans lequel l'étape de fourniture des dits au moins trois détecteurs (102, 300) dans l'assemblage de combustible nucléaire (104) comprend :
le positionnement desdits au moins trois détecteurs (102, 300) dans l'assemblage de combustible nucléaire (104) par l'insertion desdits au moins trois détecteurs (102, 300) dans un tube d'instrument dans l'assemblage de combustible nucléaire (104).
